# EUROPEAN PATENT SPECIFICATION

(11) **EP 2 591 060 B1**
(45) Date of publication and mention of the grant of the patent: **21.12.2016**
(21) Application number: 11818497.7
(22) Date of filing: 18.05.2011
(51) Int. Cl.: C09D 183/02, C09D 7/12, C08J 7/04

(54) **COATING SYSTEMS CAPABLE OF FORMING AMBIENTLY CURED HIGHLY DURABLE HYDROPHOBIC COATINGS ON SUBSTRATES**
BESCHICHTUNGSSYSTEM ZUR FORMUNG SEHR LANGLEBIGER UMGEBUNGSGEHÄRTETER UND WASSERABWEISENDER BESCHICHTUNGEN AUF SUBSTRATEN
SYSTÈMES DE REVÊTEMENT CAPABLES DE FORMER, SUR DES SUBSTRATS, DES REVÊTEMENTS HYDROPHOBES HAUTEMENT DURABLES DURCIS À LA TEMPÉRATURE AMBIANTE

(30) Priority: 09.07.2010 US 363190 P
(43) Date of publication of application: 15.05.2013
(73) Proprietor: Luna Innovations Incorporated, Roanoke, VA 24016 (US)
(72) Inventor: KOENE, Bryan, Blacksburg VA 24060 (US)
(74) Representative: Frontoni, Stefano
(86) International application number: PCT/US2011/036929
(87) International publication number: WO 2012/024005

(56) References cited:
- WO-A1-2005/066666
- DE-A1-102004 059 152
- US-A1- 2004 092 675
- US-B1- 7 294 731
- US-B2- 6 716 534

## Description

### GOVERNMENT RIGHTS

This invention was made with Government support under Grant No. N00024-08-C-4149 awarded by the Department of the Navy. The Government has certain rights to the invention.

### FIELD

The disclosed embodiments herein relate to substrate coating materials capable of forming highly durable hydrophobic coatings. In especially preferred embodiments, highly durable hydrophobic coating systems are provided which include a particulate inorganic homogenously distributed throughout an ambiently cured polymeric matrix.

### BACKGROUND

Inorganic-organic sol-gel coating materials formed from metal alkoxides are well known. In general, sol-gel materials are formed by a mixture of the starting components which react to form a viscous liquid phase as a result of a process of hydrolysis and condensation. The sol-gel processes thus result in an organically modified inorganic material that is harder than conventional organic polymers.

The use of fluoro silanes is also known to produce hydrophobic surfaces. However, direct addition of fluorosilanes into abrasion resistant formulations can result in (i) incompatible mixtures, (ii) lack of transparency, (iii) lack of hydrophobicity, (iii) lack of abrasion resistance and/or (iv) necessity for high curing temperatures.

The following non-exhaustive listing of prior proposals in the art will provide additional background to the embodiments disclosed herein:

US Patent No. 6,743,467¹ describes the use of a hydrophobic sol gel system which requires a high temperature (i.e., about 400°C) for purpose of curing.
¹ The entire content of this US patent as well as the entire contents of all other US patents and US Published Applications cited below are expressly incorporated hereinto by reference.

- US Patent No 7,344,783 describes a hydrophobic zirconium-polysiloxane sol gel system.

US Published Patent Application 2008/0299400 describes a hydrophobic abrasion resistant coating which includes silicone and hydrophobic particles.

US Published Patent Application No. 2008/0221263 describes the use of hydrophobic particles attached to surface.

US Published Patent Application 2008/0058489 describes a non-hydrophobic abrasion resistant sol gel system.

US Patent No. 6,358,612 describes an abrasion resistant sol gel coating which requires high temperatures (e.g., 90-180°C) for curing and uses fluorinated reactive silane materials with 5-30 fluorine atoms.

US Patent Nos. 6,905,772 and 6,586,502 describe transparent sol-gel inorganic-organic hybrid coatings which include hard nanoparticles to achieve abrasion resistance.

US Patent No. 6,376,576 - Discloses a curable ceramer with a fluorosilane, crosslinking silanes, colloidal inorganic oxides with acrylic or acrylamide monomers. Does not teach advantage of epoxy hybrid compounds.

US Patent No. 7,211,329 - Discloses an easily cleaned surface by coating a surface with a gel network having a hydrolyzable network forming gel and a hydrophobic substance. Patent does not teach the advantages of combining hydrolyzable gel network with epoxy hybrid compounds nor nanoparticles.

US Patent No. 6,939,908 - Discloses a hybrid silane coating with nanoparticles but does not teach the advantages of combining with hydrophobic fluorochemical

US Patent No. 6,716,534 - Discloses fluorochemical silanes combined with non-fluorinated silanes and a crosslinking agent but does not teach advantages of combining fluorochemical silanes with nanoparticles and epoxy hybrid compounds

US Patent No. 7,578,877 - Discloses room temperature sol gel carbosilane coating with fluoroalkylsilanes but does not teach advantages of combining with epoxy hybrid compounds nor nanoparticles.

US Patent No. 6,649,272 - Discloses florochemical polyether silane compound compositions with nonfluorinated compounds with hydrolysable groups but does not teach advantages of combining fluorochemical silanes with nanoparticles and epoxy hybrid compounds

US Patent No. 6,376,576 - Discloses a curable ceramer with a fluorosilane, crosslinking silanes, colloidal inorganic oxides with acrylic or acrylamide monomers. Does not teach advantage of epoxy hybrid compounds.

US Patent No. 6,361,868 - Discloses a coating composition which comprises at least one silicon compound (A) which has at least one radical which is bonded directly to Si, is not able to be separated hydrolytically and contains and epoxide group, a particulate material (B) which is selected from among oxides, oxide hydrates, nitrides and carbides of Si, Al and B and of transition metals, a Si, Ti, Zr, B, Sn or V compound (C) and at least one hydrolysable Ti, Zr or Al compound (D).

Published International Application WO 2008045022 and US Published Patent Application No. 2009/298369 describe additive particles comprised of carrier microparticles and a dense plurality of nanoparticles adhered to the surfaces of the carrier microparticles (preferably by electrostatic deposition or covalent bonding) which can be added in sufficient amounts to impart superhydrophobicity to a coating system.

### SUMMARY OF EXEMPLARY EMBODIMENT

Broadly, certain preferred forms of the present invention are embodied in substrate coating materials capable of forming highly durable hydrophobic coatings. In especially preferred embodiments, highly durable hydrophobic coating materials are provided which include a particulate inorganic homogenously distributed throughout an ambiently cured polymeric matrix.

A coating system according to the invention comprises the features recited in Claim 1. When the components of the system are admixed with one another a catalyzed coating formulation can be applied onto a substrate surface and allowed to cure thereon to form a highly durable hydrophobic coating thereon.

According to some preferred embodiments, the coating system will include (A) at least on fluorochemical silane compound having a perfluorinated segment and at least one silane group per molecule; (B) at least one non-fluorinated compound having an element M selected from the group consisting of Si, Ti, Zr, B, Al, Ge, V, Pb, Sn and Zn, and having at last two hydrolysable groups per molecule; (C) at least one cross-linking silicon compound having at least one hydrolysable group,, and at least one reactive functional group capable of engaging in a crosslinking reaction; (D) ceramic particles; (E) at least one acid catalyst; and (F) at least one ambient cure catalyst capable of ambient temperature polymerization of the at least one reactive functional group of component (C).

These and other aspects of the present invention will become more clear after careful consideration is given to the following detailed description of a presently preferred exemplary embodiment thereof.

### DETAILED DESCRIPTION

The coating system according to the invention comprises the features of Claim 1. When the components of the system are admixed with one another a catalyzed coating formulation can be applied onto a substrate surface and allowed to cure thereon to form a highly durable hydrophobic coating thereon.

### A. Fluorochemical Silane Compounds

Component (A) comprises at least one fluorochemical silane compound having a fully or partially perfluorinated segment (for example alkyl or ether segments) and at least one silane group, -Si(R¹)ₓ(R²)₃₋ₓ, per molecule, wherein R¹ represents an alkyl group (for example a C₁-C₈, preferably C₁ -C₄ primary or secondary alkyl group), R² represents a hydrolysable group (for example an alkoxy or halide group, preferably methoxy, ethoxy or chloro) and x is 0, 1, or 2.

Representative examples of fluorochemical silane compounds include those having the formula R_{f}¹Si(R¹)ₓ(R²)₃₋ₓ where R_{f}¹ represents a fully or partially perfluorinated segment (for example a 3,3,3-trifluoropropyl, (perfluorobutyl)ethyl, (perfluorohexyl)ethyl, (perfluorooctyl)ethyl, perfluorododecyl, perfluorotetradecyl, heptadecafluoro-1,1,2,2-tetrahydrodecyl, nonafluorohexyl or tridecafluoro-1,1,2,2-tetrahydrooctyl), R¹ represents an alkyl group (for example a C₁-C₈, preferably C₁-C₄ primary or secondary alkyl group) and R² represents a hydrolysable group (for example an alkoxy or halide group, preferably methoxy, ethoxy or chloro) and x is 0, 1, or 2.

Preferably, component (A) is a fluorochemical polyether silane compound according to formula (I):

R_{f}²[Q-C(R)₂- Si(R¹)ₓ(R²)₃₋ₓ]_{z} (I)

wherein R_{f}² represents a multivalent poly(perfluorooxyalkyl) or poly(perfluoroxyalkylene) segments, Q represents an organic divalent linking group (examples include amide, ether, ester or urethane linking group), R¹ represents an alkyl group (for example a C₁-C₈, preferably C₁-C₄ primary or secondary alkyl group) and R² represents a hydrolysable wherein R_{f}² represents a multivalent poly(perfluorooxyalkyl) or poly(perfluoroxyalkylene) segments, Q represents an organic divalent linking group (examples include amide, ether, ester or urethane linking group), R¹ represents an alkyl group (for example a C₁-C₈, preferably C₁-C₄ primary or secondary alkyl group) and R² represents a hydrolysable group and x is 0, 1, or 2; R represents hydrogen or an alkyl group of 1 to 4 carbon atoms and the R groups may be the same or different. Preferably R is hydrogen.

The hydrolysable groups R₂ may be the same or different and are generally capable of hydrolyzing under appropriate conditions, for example under acidic aqueous conditions, such that the fluorochemical silane compound can then undergo condensation reactions. Preferably, the hydrolysable groups upon hydrolysis yield groups capable of undergoing condensation reactions, such as silanol groups.

Examples of hydrolysable groups include halide groups, such as chlorine, bromine, iodine or fluorine, alkoxy groups -OR' (wherein R' represents a lower alkyl group, preferably containing 1 to 6, more preferably 1 to 4 carbon atoms and which may optionally be substituted by one or more halogen atoms), acyloxy groups -O(CO)-R" (wherein R" represents a lower alkyl group, preferably containing 1 to 6, more preferably 1 to 4 carbon atoms, which may be optionally substituted by one or more halogen atoms), aryloxy groups -OR'" (wherein R"' represents an aryl moiety, preferably containing 6 to 12, more preferably containing 6 to 10 carbon atoms, which may be optionally substituted by one or more substituents independently selected from halogens, and C₁-C₄ alkyl groups which may optionally be substituted by one or more halogen atoms). In the above formulae R', R", and R'" may include branched structures.

Specific examples of hydrolysable groups include methoxy, ethoxy and propoxy groups, chlorine and an acetoxy group. Particularly preferred hydrolysable groups include C₁ -C₄ alkoxy groups, such as methoxy and ethoxy groups.

In especially preferred embodiments component (A) is a perfluoropolyether with ethoxysilane terminal groups which is commercially available as FLUOROLINK^{®} S10 surface treatment agent from Solvay S.A.

Component (A) will preferably be present in an amount between 0.01 to 1.0 wt.%, more preferably between about 0.01 to about 0.5 wt.%, based on the total weight of the dried coating material.

### B. Non-Fluorinated Compounds

Component (B) will comprise one or more non-fluorinated compounds of an element M selected from the group consisting of Si, Ti, Zr, B, Al, Ge, V, Pb, Sn and Zn having at least two hydrolysable groups per molecule. Preferably, the hydrolysable groups are directly bonded to the element M.

In one embodiment of the present invention, component (B) comprises a compound according to the formula (II):

(R²)_{q}M(Y¹)_{p-q} (II)

wherein R² represents a non-hydrolysable group, M represents an element of valency p+q, selected from the group consisting of Si, Ti, Zr, B, Al, Ge, V, Pb, Sn and Zn, p is 3 or 4 depending on the valence of M, q is 0, 1 or 2, and Y¹ represents a hydrolysable group.

The hydrolysable groups present in component (B) may be the same or different and are generally capable of hydrolyzing under appropriate conditions, for example under acidic aqueous conditions, such that component (B) can undergo condensation reactions. Preferably, the hydrolysable groups upon hydrolysis yield groups capable of undergoing condensation reactions, such as hydroxyl groups.

Typical and preferred examples of hydrolysable groups include those as described with respect to component (A). Preferably, component (B) includes tetra-, tri- or dialkoxy (preferably containing 1 to 4 carbon atoms) compounds.

The non-hydrolysable groups R² may be the same or different and are generally not capable of hydrolyzing under the conditions listed above. For example, the non-hydrolysable groups R² may be independently selected from a hydrocarbon group, for example a C₁ -C₃₀ alkyl group, which may be straight chained or branched and may include one or more aliphatic, cyclic hydrocarbon structures, a C₆-C₃₀ aryl group (optionally substituted by one or more substituents selected from halogens and C₁ -C₄ alkyl groups), or a C₇-C₃₀ aralkyl group.

In one embodiment the non-hydrolysable groups R² are independently selected from a hydrocarbon group, for example a C₁ -C₃₀ alkyl group and a C₆ -C₂₀ aryl group (optionally substituted by one or more substituents selected from halogens and C₁ -C₄ alkyl groups).

Preferred compounds (B) include those in which M is Ti, Zr, Si and Al. Representative examples of component (B) include tetramethoxysilane, tetraethoxysilane, methyl triethoxysilane, dimethyldiethoxysilane, octadecyltriethoxysilane, methyl trichlorosilane, tetra-methyl orthotitanate, tetra ethyl orthotitanate, tetra-iso-propyl orthotitanate, tetra-n-propyl orthotitanate, tetraethyl zirconate, tetra-iso-propyl zirconate tetra-n-propyl zirconate and the like. More preferred compounds include C₁ -C₄ alkoxy derivatives of Si, Ti and Zr. Particularly preferred compounds (B) include methyl trimethoxysilane and tetraethoxysilane. Single compounds or mixtures of compounds (B) may be used.

Component (B) will be present in an amount sufficient to achieve between 10 to 99 wt.%, more preferably between about 25 to about 95 wt.% of component (B), based on the total weight of the dried coating material.

### C. Crosslinking Silicon Compounds

Component (C) is preferably includes at least one crosslinking silicon compound having at least one hydrolysable group, and at least one reactive functional group capable of engaging in a crosslinking reaction.

Suitable and preferred hydrolysable groups for component (C) include those groups mentioned above with respect to component (A). If component (C) includes more than one hydrolysable group, they may be the same or different. Particularly preferred hydrolysable groups are selected from C₁ -C₄ alkoxy groups, such as methoxy, ethoxy, iso- and (preferably) n-propoxy, or iso- and (preferably) n-butoxy groups.

The reactive functional group is a group which is capable of engaging in a crosslinking reaction so as to provide further crosslinking functionality to the polycondensation product that can be obtained from components (A), (B) and (C). The crosslinking reaction is initiated at ambient room temperature (e.g., between about 20°C to 25°C) by catalysts to be described below. If component (C) includes more than one reactive functional groups, these groups may be the same or different. Of these, free radically polymerizable groups, such as epoxide, vinyl, acrylate or methacrylate groups, are particularly preferred reactive functional groups. A representative example is methacryloxypropyltrimethoxysilane as a free radically polymerizable silane.

In especially preferred embodiments, component (C) includes at least one epoxide group containing silicon compound which has at least one hydrolysable group and at least one organic group that is bonded directly to the silicon atom which is unable to be separated hydrolytically. Representative examples include epoxyhexyltriethoxysilane, 2-(3,4-epoxycyclohexyl)ethyltriethoxysilane, Preferred for use as component (C) is glycidoxypropyl trimethoxy silane.

Component (C) will be present in the coating systems in an amount sufficient to achieve between 1 to 75 wt.%, more preferably between about 5 to about 50 wt.% of component (C), based on the total weight of the dried coating material.

### D. Ceramic Particles

The ceramic particles are in the form of colloidal solutions selected from aqueous silica sols, aqueous alumina surface modified silica sols, and organic solvent based silica sols.

The particles will have a size ranging from about 0.1 to about 750 nm, preferably from about 1 to about 500 nm, and more preferably between about 1 to about 50 nm. If cured transparent coatings are desired (e.g., cured coatings which allow the substrate to be visible such as may be required over a colored or tinted substrate material or to permit visibility through both a transparent substrate and the coating), then the particles will have a size that is less than the wavelength of visible light, e.g., less than about 380 nm.

The ceramic particles of Component (D) may be added to the other components as particles per se and/or may be formed in situ during the curing of the coating material. Thus, by way of example when methyl trimethoxysilane (MTMOS) or tetraethoxysilane (TEOS) are employed as Component (B), they will be converted to particulate silica in situ with the sol-gel reaction via hydrolysis and condensation of the silanes. Thus, Component (D) includes both preformed ceramic particulates that are added to the coating material system and/or ceramic particulates that are formed in situ by virtue of the hydrolysis and condensation reactions occurring during curing of the coating materials.

Component (D) will be present in the coating systems in an amount sufficient to achieve between 1 to 75 wt.%, more preferably between about 1 to about 50 wt.% of component (D), based on the total weight of the dried coating material.

### E. Acid Catalysts

At least one acid catalyst is employed so as to catalyze the condensation reaction of the hydrolysable groups in components (A), (B) and (C). Preferred acid catalysts include organic acid catalysts such as acetic acid, citric acid, formic acid, triflic acid, perfluorobutyric acid and the like. Examples of inorganic acids include sulfuric acid, hydrochloric acid and the like. Preferred is hydrochloric acid (HCl).

The acid catalyst will generally be used in amounts between about 0.001 to about 10 wt.%, more.preferably between 0.005 wt.% to about 5 wt.% of component (E), based on the total weight of the dried coating material.

### F. Ambient Cure Catalysts

At least one catalyst to initiate ambient temperature (e.g., between about 20°C to about 25°C) polymerization of the at least one reactive functional group of component (C) will be present. Ambient cure catalysts of component (F) are those capable of ambient temperature polymerization of epoxide groups, and include Lewis Base catalysts. The Lewis base is a nitrogen compound selected from imidazoles, such as 1-methylimidazole, 2-methylimidazole, 2-ethyl-4-methylimidazole, 2-benzyl-4-methylimidazole, and 1-cyanoethyl-2-methylimidazole.

In general, curing of the reactive compositions of this invention, may be carried out at room temperature for the majority of curable compositions, although low temperature (e.g., -10° C.) or elevated temperature (e.g., 30° to 200° C., preferably 50° to 150° C.) can be used to subdue the exotherm of polymerization or to accelerate the polymerization, respectively. Temperature of polymerization and amount of catalyst will vary and be dependent on the particular curable composition used and the desired application of the polymerized or cured product. The amount of curing agent (catalyst or initiator) to be used in this invention should be sufficient to effect polymerization of the monomers (i.e., a catalytically effective amount) under the desired use conditions. The ambient cure catalyst will generally be used in amounts between about 0.001 to about 10 wt.%, more preferably between 0.01 wt.% to about 5 wt.% of component (F), based on the total weight of the dried coating material.

### G. Other Ingredients

Other ingredients that do not affect the basic and novel characteristics of the coating systems as described above may be included therein. Thus, for example, the coating systems may include solvents in amounts sufficient to dissolve the components and to provide sufficient flowability to allow the materials to be coated onto substrate surfaces. Preferred solvents are organic solvents including for example C₁-C₆ aliphatic alcohols such as methanol, ethanol, n-propanol, isopropylalcohol, and n-butenol; ketones such as acetone or methyl ethyl ketone; esters, such as ethyl acetate, methylformate and ethers, such as diethyl ether. Preferred is n-propanol.

### H. Coating Methods

The coating materials of the present invention are most preferably provided as at least a two-component system. For example, Components (A)-(D) may be supplied as one part of a two-part system that is diluted with sufficient amount of solvent to achieve the desired flowability, with Components (E)-(F) supplied as the second part of the system. The two system parts may then be mixed together just prior to application onto a substrate following which the coated material may be allowed to air cure under ambient temperature conditions.

Alternatively, a three-part system may be provided. Thus, components (A)-(C) may be provided as one part of such system that is diluted with sufficient amount of solvent to achieve the desired flowability, with Components (D)-(E) on the one hand and Component (F) on the other hand being supplied as the second and third parts of the system, respectively. All three of such parts may then be mixed together just prior to application onto a substrate following which the coated material may be allowed to air cure under ambient temperature conditions.

Once Components (A)-(F) are mixed together, curing times under ambient conditions will generally be from 15 minutes to about 60 minutes. The curing time of the catalyzed coating material mixture may be adjusted by thermal exposure. That is, exposure of the coating material to temperatures greater than ambient temperature (i.e., greater than about 30°C) or less than ambient temperature (i.e., less than about 15°C) will significantly decrease or increase, respectively, the curing time of the material. For example, the coating material can be cured to touch within 5 minutes with heat treatment at a temperature of about 120°C. Alternatively, the coating material can be rendered storage-stable for several days without curing by subjecting it to refrigeration at about 5°C or lower.

Any conventional technique to coat flowable materials onto a substrate surface may be employed, such as dip coating, flow coating, brush coating, roller application, spraying techniques.

The thickness of the cured coating material can vary depending on the end use application. For example, the coating can be prepared thinner (e.g., less than about 1 micron by dilution with additional solvent. The coating can be prepared thicker (e.g., greater than about1.5 microns) by removal of some of the solvent from the coating formulation. In general, a thicker cured coating will be more durable. Therefore, the cured coating thickness will typically be greater than about 1 micron , for example, between about 1 to about 5 microns, and more typically between about 1 to about 1.5 microns.

The cured coating is preferably substantially transparent if applied onto a transparent substrate or a substrate having a surface condition (e.g., color) which is desired to be visibly perceived through the cured coating material. If a translucent or opaque coating is required, then suitable opacifier pigments may be added to the uncured coating material to achieve the appropriate amount of desired opacity.

The substrates onto which the coating systems may be applied are not limited and thus may include both rigid and flexible substrate materials. By way of example only, suitable substrates include glass, polymeric substrates (e.g., polycarbonate), textiles, metal substrates, such as steel, aluminum. The coating materials may be applied directly onto the underlying substrate material or onto a previously applied paint coating, such as polyurethane and epoxy paint coatings.

The present invention will be further understood by reference to the following non-limiting Examples.

### Example 1

The ingredients identified in Table 1 (prior to the water addition) were added by volume with mixing at room temperature (approximately 20°C). Water and HCl were added dropwise with vigorous stirring. The solution was stirred for 1 hour, after which methyl imidazole solution is added.

Samples were coated onto glass microscope slides and were measured for water contact angle (WCA) for a droplet size of 1-5 µl, watershedding tilt angle (WS) for a droplet size of 120 µl, and haze (H) using a haze meter (HAZE-GARD^{™} Meter, Byk-Gardner USA, Columbia, MD). Abrasion was performed with a reciprocal abrasion tester (Byk-Gardner USA, Columbia, MD) using SCOTCH-BRITE^{®} green abrasive pads (3M Corporation) via ASTM D2486.

All coatings cured at room temperature between about 20°C to about 25°C. The coatings cured to touch within 1 hour. Full cure was observed within 2 days by no change in abrasion performance. Comparative example G without hydrophobic silane was not hydrophobic, and had poor watershedding properties. Comparative example H without methyl imidazole catalyst did not cure at room temperature and therefore was not further investigated. The data is presented in Table 1A below.

**Table 1. Formulations for Example 1 (volume in ml)**

| | **INVENTION** | | **COMPARATIVE** | | | | | |
|---|---|---|---|---|---|---|---|---|
| | **A** | **B** | **C** | **D** | **E** | **F** | **G** | **H** |
| Colloidal silica (10 nm) | 3 | 3 | 3 | 3 | 3 | 3 | 3 | 3 |
| IPA | 5 | 5 | 5 | 5 | 5 | 5 | 5 | 5 |
| GPTMS | 1 | 1 | 1 | 1 | 1 | 1 | 1 | 1 |
| MTMS | 1 | 1 | 1 | 1 | 1 | 1 | 1 | 1 |
| Perfluoropolyether triethoxy silane terminated | 1 drop | 2 drops | | | | | | |
| SiF₁₇ | | | 1 drop | 2 drops | | | | |
| DMS-XT11 | | | | | 1 drop | 2 drops | | |
| H₂O | 0.25 | 0.25 | 0.25 | 0.25 | 0.25 | 0.25 | 0.25 | 0.25 |
| 0.05 M hydrochloric acid | 0.5 | 0.5 | 0.5 | 0.5 | 0.5 | 0.5 | 0.5 | 0.5 |
| 10% methyl imidazole in IPA | 0.1 | 0.1 | 0.1 | 0.1 | 0.1 | 0.1 | 0.1 | 0.1 |

| | | | | | | | | |
|---|---|---|---|---|---|---|---|---|
| Notes: IPA - isopropanol GPTMS - glycidoxypropyltrimethoxysilane (Gelest) MTMS - methyltrimethoxysilane (Gelest) SiF₁₇ - heptadecafluoro-1,1,2,2-tetrahydrodecyl)trimethoxysilane (Gelest) DMS-XT11 - triethoxysilylethyl terminated polydimethylsiloxane (Gelest) 1 drop approx. equals 0.005 g | | | | | | | | |

**Table 1A - Abrasion results (Example 1)**

| **Abrasion Cycles:** | **0 cycles** | | | **25 cycles** | | |
|---|---|---|---|---|---|---|
| **Sample ID** | **CA** | **WS** | **Haze** | **CA** | **WS** | **Haze** |
| 1A | 113 | 7 | 0.48 | 112 | 13 | 2.1 |
| 1B | 114 | 7 | 0.37 | 111 | 17 | 2.11 |
| 1C | 107 | 8 | 0.21 | 92 | 20 | 4.3 |
| 1D | 110 | 8 | 0.26 | 97 | 27 | 4.95 |
| 1E | 103 | 8 | 0.36 | 93 | 17 | 1.55 |
| 1F | 103 | 8 | 0.39 | 101 | 17 | 1.81 |
| 1G | 75 | 22 | 0.28 | 76 | 21 | 2.21 |

### Example 2

Example 1 was repeated using the ingredients of Table 2 below (by volume (ml)). The results of abrasion testing for water contact angle (WCA) for a droplet size of 1-5 µl, watershedding tilt angle (WS) for a droplet size of 120 µl, and haze (H) are presented below in Table 2A.

**Table 2. Formulations for Example 2 (volume in ml)**

| | **A** | **B** | **C** |
|---|---|---|---|
| 1-propanol | 8.75 | 1.75 | 3 |
| GPTMS | 1 | 1 | 1 |
| MTMS | 1 | 1 | 1 |
| TEOS | | | 2.5 |
| Perfluoropolyether triethoxy silane terminated | 1 drop | 1 drop | 1 drop |
| Propylene glycol methyl ether | 0.5 | 0.25 | 0.25 |
| Colloidal silica | 3 | 3 | |
| Water | 0.25 | 0.25 | 1.5 |
| 0.5M HCl | 0.5 | 0.25 | 0.5 |
| 1.3% methyl imidazole | 7.5 | 3.75 | 3.75 |

| | | | |
|---|---|---|---|
| Notes: TEOS - tetraethoxysilane | | | |

**Table 2A - Abrasion results (Example 2)**

| **Abrasion Cycles:** | **0 cycles** | | | **25 cycles** | | |
|---|---|---|---|---|---|---|
| **Sample ID** | **CA** | **WS** | **Haze** | **CA** | **WS** | **Haze** |
| 2A | 103 | 8 | 0.79 | 112 | 10 | 5.01 |
| 2B | 110 | 7 | 0.88 | 113 | 8 | 2.14 |
| 2C | 111 | 5 | 0.52 | 110 | 7 | 0.75 |

### Example 3 (Comparative)

The ingredients of Table 3 below were added in order by volume with stirring for 1 hour followed by addition of final 1-methyl imidazole solution. Solutions were cast on substrates as previously described in Example 1, and cured at room temperature. Water contact (WC) angle measurements were performed and are presented also in Table 3. The WC angles show that the coating without the fluoro silane ingredient (3B) is not hydrophobic in comparison to the formulation with the fluoro silane ingredient (3A).

**Table 3. Formulations for Example 3 (volume in ml)**

| | **A** | **B** |
|---|---|---|
| 1-propanol | 1.75 | 1.75 |
| GPTMS | 1 | 1 |
| MTMS | 1 | 1 |
| Perfluoropolyether triethoxy silane terminated | 0.005g | 0 |
| Propylene glycol methyl ether | 0.25 | 0.25 |
| Colloidal silica | 3 | 3 |
| Water | 0.25 | 0.25 |
| 0.5M HCl | 0.25 | 0.25 |
| 1.3% methyl imidazole | 3.75 | 3.75 |
| Water contact angle | 114 | 73 |

### Example 4 (Comparative)

Ingredients in Table 4 were added in order by volume with stirring for 1 hour followed by addition of final 1-methyl imidazole solution. Solutions were cast on substrates as previously described in Example 1, and cured at room temperature. The absence of colloidal silica from the coating (4B) shows lower hydrophobicity with lower water contact angles and higher watershedding angles as compared to the coating with colloidal silica (4A). The increased haze with abrasion also demonstrates poor durability of the coating with abrasion as shown in Table 4A below.

**Table 4. Formulations for Example 4 (volume in ml)**

| | **A** | **B** |
|---|---|---|
| 1-propanol | 1.75 | 1.75 |
| GPTMS | 1 | 1 |
| MTMS | 1 | 1 |
| Perfluoropolyether triethoxy silane terminated | 0.005g | 0.005g |
| Propylene glycol methyl ether | 0.25 | 0.25 |
| Colloidal silica | 3 | 0 |
| Water | 0.25 | 0.25 |
| 0.5M HCl | 0.25 | 0.25 |
| 1.3% methyl imidazole | 3.75 | 3.75 |

**Table 4A. Abrasion results for Example 4**

| | **Initial** | | | **After abrasion** | | |
|---|---|---|---|---|---|---|
| **Sample** | **CA** | **WS** | **H** | **CA** | **WS** | **H** |
| 4A | 111° | 6° | 0.50 | 113 | 6° | 1.31 |
| 4B | 102° | 16° | 2.66 | 106 | 19° | 4.66 |

### Example 5

The components in Table 5 below were added in the order listed by volume with stirring for 1 hour followed by addition of final 1-methyl imidazole (or ammonium hydroxide) solution. The solutions were cast onto glass microscope slide substrates as previously described, and the time to harden at room temperature was measured.

**Table 5. Formulations (volume in ml)**

| | **A** | **B** | **C** | **D** |
|---|---|---|---|---|
| 1-propanol | 1.5 | 1.5 | 1.5 | 1.5 |
| GPTMS | 1 | 0 | 1 | 1 |
| MTMS | 1 | 1 | 1 | 1 |
| Perfluoropolyether triethoxy silane terminated | 0.005g | 0.005g | 0.005g | 0.005g |
| Propylene glycol methyl ether | 0.25 | 0.25 | 0.25 | 0.25 |
| Colloidal silica | 3 | 3 | 3 | 3 |
| Water | 0.25 | 0.25 | 0.25 | 0.25 |
| 0.05M HCl | 0.25 | 0.25 | 0.25 | 0.25 |
| 1.3% methyl imidazole | 3.75 | 3.75 | 0 | 0 |
| 0.05M NH₄OH | | | 0.25 | |

| | | | | |
|---|---|---|---|---|
| Observations: • 5A. Control coating - cured hard and durable within 1 hour • 5B. Coating without epoxy silane - cured hard in 4 hours , but had very poor durability to light scratching with wooden applicator stick • 5C. Coating using ammonium hydroxide to cure instead of methyl imidazole - coating was still soft after 5 hours, but hard within 16 hours but had poor durability to hard scratching with wooden applicator stick • 5D. Coating with no base catalyst - coating was still soft after 5 hours, but hard within 16 hours but had poor durability to hard scratching with wooden applicator stick | | | | |

The control coating of composition 5A cured within 1 hour consistent with previous examples and was durable to hard scratching with a wooden applicator stick. Coating composition 5B without epoxy silane GPTMS cured to hardness at around 4 hours, but had poor durability to light rubbing. The coatings of compositions 5C and 5D without methyl imidazole took greater than 5 hours to cure, but were hard within 16 hours. These had better durability than composition 5B, but could be removed with hard rubbing.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope thereof.

## Claims

1. An ambiently curable coating system comprising:
(A) at least one fluorochemical silane compound having a perfluorinated segment and at least one silane group per molecule;
(B) at least one non-fluorinated compound having an element M selected from the group consisting of Si, Ti, Zr, B, Al, Ge, V, Pb, Sn and Zn, and having at least two hydrolysable groups per molecule;
(C) at least one cross-linking silicon compound having at least one hydrolysable group, and at least one reactive functional group capable of engaging in a crosslinking reaction;
(D) 1 to 75 wt.%, based on total dry weight of the dried coating system, of ceramic particles in the form of colloidal solutions, selected from aqueous silica sols, aqueous alumina surface modified silica sols, and organic solvent based silica sols, having a particle size ranging from about 0.1 nm to 750 nm;
(E) at least one acid catalyst; and
(F) at least one ambient cure imidazole catalyst capable of ambient temperature polymerization of the at least one reactive functional group of component (C).

2. A coating system as in claim 1, wherein Component (A) is a fluorochemical polyether silane compound according to formula (I):
R_{f}²[Q-C(R)₂- Si(R¹)ₓ(R²)₃₋ₓ]_{z} (I)
wherein R_{f}² represents a multivalent poly(perfluorooxyalkyl) or poly(perfluoroxyalkylene) segments, Q represents an organic divalent linking group, R¹ represents an alkyl group and R² represents a hydrolysable group and x is 0, 1, or 2; R represents hydrogen or an alkyl group of 1 to 4 carbon atoms and the R groups may be the same or different,
wherein, in particular, Q is an amide, ether, ester or urethane linking group, and R1 is a C₁-C₈, primary or secondary alkyl group, and
wherein, in particular, the hydrolysable groups R² are selected from halide groups, alkoxy groups -OR' wherein R' represents a lower alkyl group containing 1 to 6 carbon atoms optionally be substituted by one or more halogen atoms, acyloxy groups - O(CO)-R" wherein R" represents a lower alkyl group containing 1 to 6 carbon atoms optionally substituted by one or more halogen atoms, and aryloxy groups -OR'" wherein R'" represents an aryl moiety containing 6 to 12 carbon atoms optionally substituted by one or more substituents independently selected from halogens, and C₁ -C₄ alkyl groups which may optionally be substituted by one or more halogen atoms.

3. A coating system as in claim 1, wherein component (A) is a perfluoropolyether with ethoxysilane terminal groups.

4. A coating system as in claim 1, wherein component (B) is at least one compound according to the formula (II):
(R²)_{q}M(Y¹)_{p-q} (II)
wherein R² represents a non-hydrolysable group, M represents an element of valency p+q selected from the group consisting of Si, Ti, Zr, B, Al, Ge, V, Pb, Sn and Zn, p is 3 or 4 depending on the valence of M, q is 0, 1 or 2, and Y¹ represents a hydrolysable group, and
wherein, in particular, component (B) is at least one selected from the group consisting of tetramethoxysilane, tetraethoxysilane, methyl triethoxysilane, dimethyldiethoxysilane, octadecyltriethoxysilane, methyl trichlorosilane, tetra-methyl orthotitanate, tetra ethyl orthotitanate, tetra-iso-propyl orthotitanate, tetra-n-propyl orthotitanate, tetraethyl zirconate, tetra-iso-propyl zirconate tetra-n-propyl zirconate.

5. A coating system as in claim 1, wherein component (C) wherein the at least one hydrolysable group is selected from the group consisting of methoxy, ethoxy, iso-propoxy, n-propoxy, or iso-butoxy and n-butoxy groups, and wherein the at least one reactive functional group is selected from the group consisting of epoxide, vinyl, acrylate and methacrylate groups.

6. A coating system as in claim 1, wherein component (D) further comprises at least one of an oxide, oxyhydrate, nitride or carbide of Si, Al, B and transition metals, and wherein, in particular, component (D) comprises at least one of colloidal silica and titania.

7. A coating system as in claim 1, wherein component (E) comprises at least one acid catalyst selected from the group consisting of acetic acid, citric acid, formic acid, triflic acid, perfluorobutyric acid, sulfuric acid and hydrochloric acid.

8. A coating system as in claim 1, wherein,
the imidazole catalyst of component (F) is 2-methyl imidazole.

9. A coating system as in claim 1, wherein component (F) further comprises an initiator for radical polymerization of crosslinkable organic groups containing vinyl, allyl, acrylates, or other unsaturated monomers.

10. A coating system as in claim 1, in the form of at least a two-part system wherein some of the Components (A)-(F) are present as a mixture comprising a first part of the system, and other of the Components (A-(F) are present as a mixture comprising at least a second part of the system.

11. A coating system as in claim 10, wherein Components (A)-(D) are present as a mixture comprising the first part of the system, and Components (E)-(F) are present as a mixture comprising the second part of the system.

12. A coating system as in claim 10, wherein Components (A)-(C) are present as a mixture comprising the first part of the system, and wherein Components (D)-(E) are present as a mixture comprising the second part of the system, and wherein Component (F) is present as a third part of the system.

13. A coated substrate which includes a substrate, and a coating system according to claim 1 coated onto a surface of the substrate, wherein, in particular, the substrate is selected from the group consisting of glass, polymeric substrates, textiles, and metal substrates, and wherein, in particular, the coating system is cured.

14. A method of making a coated substrate comprising applying a coating system according to claim 1 onto a surface of a substrate, and thereafter allowing the coating system to cure under ambient temperature conditions,
wherein, in particular, the substrate is selected from the group consisting of glass, polymeric substrates, textiles, and metal substrates.

## Patentansprüche

1. Bei Umgebungsbedingungen härtbares Beschichtungssystem umfassend:
(A) wenigstens eine fluorchemische Silanverbindung mit einem perfluorierten Segment und wenigstens einer Silangruppe pro Molekül;
(B) wenigstens eine nicht-fluorierte Verbindung mit einem Element M, ausgewählt aus der Gruppe bestehend aus Si, Ti, Zr, B, Al, Ge, V, Pb, Sn und Zn, und mit wenigstens zwei hydrolysierbaren Gruppen pro Molekül;
(C) wenigstens eine vernetzende Siliciumverbindung mit wenigstens einer hydrolysierbaren Gruppe und wenigstens einer reaktiven funktionellen Gruppe, die an einer Vernetzungsreaktion teilnehmen kann;
(D) 1 bis 75 Gew.-%, bezogen auf das Gesamttrockengewicht des getrockneten Beschichtungssystems, keramische Teilchen in Form von kolloidalen Lösungen, ausgewählt aus wässrigen Kieselsolen, wässrigen Aluminiumoxidoberflächenmodifizierten Kieselsolen, und Kieselsolen auf Basis von organischem Lösungsmittel, mit einer Teilchengröße im Bereich von ungefähr 0,1 nm bis 750 nm;
(E) wenigstens einen Säurekatalysator; und
(F) wenigstens einen bei Umgebungsbedingungen härtenden Imidazol-Katalysator, der zu einer bei Umgebungstemperatur erfolgenden Polymerisation der wenigstens einen reaktiven funktionellen Gruppe von Komponente (C) im Stande ist.

2. Beschichtungssystem wie in Anspruch 1, wobei Komponente (A) eine fluorchemische Polyethersilanverbindung gemäß Formel (I) ist:
R_{f}²[Q-C(R)₂-Si(R¹)ₓ(R²)₃₋ₓ]_{z} (I)
wobei R_{f}² ein mehrwertiges Poly(perfluoroxyalkyl) oder Poly(perfluoroxyalkylen)segmente bedeutet, Q eine organische zweiwertige Verbindungsgruppe bedeutet, R¹ eine Alkylgruppe bedeutet und R² eine hydrolysierbare Gruppe bedeutet und x 0, 1 oder 2 ist; R Wasserstoff oder eine Alkylgruppe mit 1 bis 4 Kohlenstoffatomen bedeutet und die R-Gruppen gleich oder verschieden sein können,
wobei insbesondere Q eine Amid-, Ether-, Ester- oder Urethan-Verbindungsgruppe ist und R¹ eine primäre oder sekundäre C₁-C₈-Alkylgruppe ist, und
wobei insbesondere die hydrolysierbaren Gruppen R² ausgewählt sind aus Halogenidgruppen, Alkoxygruppen -OR', wobei R' eine niedere Alkylgruppe bedeutet, die 1 bis 6 Kohlenstoffatome enthält und gegebenenfalls durch ein oder mehrere Halogenatome substituiert ist, Acyloxygruppen -O(CO)-R", wobei R" eine niedere Alkylgruppe bedeutet, die 1 bis 6 Kohlenstoffatome enthält und gegebenenfalls durch ein oder mehrere Halogenatome substituiert ist, und Aryloxygruppen -OR"', wobei R'" einen Arylrest bedeutet, der 6 bis 12 Kohlenstoffatome enthält und gegebenenfalls durch einen oder mehrere Substituenten substituiert ist, die unabhängig voneinander ausgewählt sind aus Halogenen und C₁-C₄-Alkylgruppen, welche gegebenenfalls durch ein oder mehrere Halogenatome substituiert sein können.

3. Beschichtungssystem wie in Anspruch 1, wobei Komponente (A) ein Perfluorpolyether mit Ethoxysilan-Endgruppen ist.

4. Beschichtungssystem wie in Anspruch 1, wobei Komponente (B) wenigstens eine Verbindung gemäß der Formel (II) ist:
(R²)_{q}M(Y¹)_{p-q} (II)
wobei R² eine nichthydrolysierbare Gruppe bedeutet, M ein Element der Wertigkeit p+q bedeutet, ausgewählt aus der Gruppe bestehend aus Si, Ti, Zr, B, Al, Ge, V, Pb, Sn und Zn, p 3 oder 4 ist in Abhängigkeit von der Wertigkeit von M, q 0, 1 oder 2 ist, und Y¹ eine hydrolysierbare Gruppe bedeutet, und
wobei insbesondere Komponente (B) wenigstens eine, ausgewählt aus der Gruppe bestehend aus Tetramethoxysilan, Tetraethoxysilan, Methyltriethoxysilan, Dimethyldiethoxysilan, Octadecyltriethoxysilan, Methyltrichlorsilan, Tetramethylorthotitanat, Tetraethylorthotitanat, Tetraisopropylorthotitanat, Tetra-n-propyl-orthotitanat, Tetraethylzirconat, Tetraisopropylzirconat, Tetra-n-propylzirconat, ist.

5. Beschichtungssystem wie in Anspruch 1, wobei in Komponente (C) die wenigstens eine hydrolysierbare Gruppe ausgewählt ist aus der Gruppe bestehend aus Methoxy-, Ethoxy-, Isopropoxy-, n-Propoxy- oder Isobutoxy- und n-Butoxy-Gruppen, und wobei die wenigstens eine reaktive funktionelle Gruppe ausgewählt ist aus der Gruppe bestehend aus Epoxid-, Vinyl-, Acrylat- und Methacrylat-Gruppen.

6. Beschichtungssystem wie in Anspruch 1, wobei Komponente (D) außerdem wenigstens eines von einem Oxid, Oxidhydrat, Nitrid oder Carbid von Si, Al, B und Übergangsmetallen umfasst und wobei insbesondere Komponente (D) wenigstens eines von kolloidalem Siliciumdioxid und Titandioxid umfasst.

7. Beschichtungssystem wie in Anspruch 1, wobei Komponente (E) wenigstens einen Säurekatalysator, ausgewählt aus der Gruppe bestehend aus Essigsäure, Citronensäure, Ameisensäure, Trifluormethansulfonsäure, Perfluorbuttersäure, Schwefelsäure und Chlorwasserstoffsäure, umfasst.

8. Beschichtungssystem wie in Anspruch 1, wobei der Imidazol-Katalysator von Komponente (F) 2-Methyl-imidazol ist.

9. Beschichtungssystem wie in Anspruch 1, wobei Komponente (F) außerdem einen Initiator für eine Radikalpolymerisation von vernetzbaren organischen Gruppen, die Vinyl, Allyl, Acrylate, oder andere ungesättigte Monomere enthalten, umfasst.

10. Beschichtungssystem wie in Anspruch 1, in Form von wenigstens einem zweiteiligen System, wobei einige von den Komponenten (A) - (F) als eine Mischung vorhanden sind, die einen ersten Teil des Systems umfasst, und andere von den Komponenten (A) - (F) als eine Mischung vorhanden sind, die wenigstens einen zweiten Teil des Systems umfasst.

11. Beschichtungssystem wie in Anspruch 10, wobei die Komponenten (A) - (D) als eine Mischung vorhanden sind, die den ersten Teil des Systems umfasst, und die Komponenten (E) - (F) als eine Mischung vorhanden sind, die den zweiten Teil des Systems umfasst.

12. Beschichtungssystem wie in Anspruch 10, wobei die Komponenten (A) - (C) als eine Mischung vorhanden sind, die den ersten Teil des Systems umfasst, und wobei die Komponenten (D) - (E) als eine Mischung vorhanden sind, die den zweiten Teil des Systems umfasst, und wobei die Komponente (F) als ein dritter Teil des Systems vorhanden ist.

13. Beschichtetes Substrat, welches ein Substrat und ein Beschichtungssystem gemäß Anspruch 1, das auf eine Oberfläche des Substrats aufgetragen ist, umfasst, wobei insbesondere das Substrat ausgewählt ist aus der Gruppe bestehend aus Glas, polymeren Substraten, Textilien und Metallsubstraten, und wobei insbesondere das Beschichtungssystem gehärtet ist.

14. Verfahren zum Herstellen eines beschichteten Substrats umfassend das Aufbringen eines Beschichtungssystems gemäß Anspruch 1 auf eine Oberfläche eines Substrats und danach das Härtenlassen des Beschichtungssystems unter Umgebungstemperaturbedingungen, wobei insbesondere das Substrat ausgewählt ist aus der Gruppe bestehend aus Glas, polymeren Substraten, Textilien und Metallsubstraten.

## Revendications

1. Système de revêtement durcissable à température ambiante comprenant :
(A) au moins un composé silane fluorochimique ayant un segment perfluoré et au moins un groupe silane par molécule ;
(B) au moins un composé non fluoré ayant un élément M choisi dans le groupe constitué de Si, Ti, Zr, B, Al, Ge, V, Pb, Sn et Zn, et ayant au moins deux groupes hydrolysables par molécule ;
(C) au moins un composé de silicium réticulant ayant au moins un groupe hydrolysable, et au moins un groupe fonctionnel réactif capable de participer à une réaction de réticulation ;
(D) de 1 à 75 % en poids, sur la base du poids sec total du système de revêtement séché, de particules céramiques sous la forme de solutions colloïdales, choisies parmi les sols de silice aqueux, les sols aqueux de silice modifiés en surface par l'alumine, et les sols de silice à base de solvant organique, ayant une taille de particule située dans une plage d'environ 0,1 nm à 750 nm ;
(E) au moins un catalyseur acide ; et
(F) au moins un catalyseur d'imidazole durcissable à température ambiante capable de réaliser la polymérisation à température ambiante de l'au moins un groupe fonctionnel réactif du composant (C).

2. Système de revêtement selon la revendication 1, dans lequel le Composant (A) est un composé polyéther silane fluorochimique répondant à la formule (I) :
R_{f}²[Q-C(R)₂-Si(R¹)ₓ(R²)₃₋ₓ]_{z} (I)
formule dans laquelle R_{f}² représente un segment poly(perfluorooxyalkyle) ou poly(perfluoroxyalkylène) multivalent, Q représente un groupe de liaison divalent organique, R¹ représente un groupe alkyle et R² représente un groupe hydrolysable et x vaut 0, 1 ou 2 ; R représente un atome d'hydrogène ou un groupe alkyle de 1 à 4 atomes de carbone et les groupes R peuvent être identiques ou différents,
dans laquelle, en particulier, Q représente un groupe de liaison amide, éther, ester ou uréthane, et R¹ représente un groupe alkyle en C₁ à C₈, primaire ou secondaire, et
dans laquelle, en particulier, les groupes hydrolysables R² sont choisis parmi les groupes halogénure, les groupes alcoxy -OR', formule dans laquelle R' représente un groupe alkyle inférieur contenant de 1 à 6 atomes de carbone facultativement substitués par un ou plusieurs atomes d'halogène, les groupes acyloxy -O(CO)-R", formule dans laquelle R" représente un groupe alkyle inférieur contenant de 1 à 6 atomes de carbone facultativement substitués par un ou plusieurs atomes d'halogène, et les groupes aryloxy -OR"', formule dans laquelle R'" représente un groupement aryle contenant de 6 à 12 atomes de carbone facultativement substitués par un ou plusieurs substituants indépendamment choisis parmi les atomes d'halogène, et les groupes alkyles en C₁ à C₄ qui peuvent facultativement être substitués par un ou plusieurs atomes d'halogène.

3. Système de revêtement selon la revendication 1, dans lequel le composant (A) est un perfluoropolyéther comportant des groupes terminaux éthoxysilane.

4. Système de revêtement selon la revendication 1, dans lequel le composant (B) est au moins un composé répondant à la formule (II) :
(R²)_{q}M(Y¹)_{p-q} (^{II})
formule dans laquelle R² représente un groupe non hydrolysable, M représente un élément de valence p+q choisi dans le groupe constitué de Si, Ti, Zr, B, Al, Ge, V, Pb, Sn et Zn, p vaut 3 ou 4 en fonction de la valence de M, q vaut 0, 1 ou 2, et Y¹ représente un groupe hydrolysable, et
dans lequel, en particulier, le composant (B) est au moins un composant choisi dans le groupe constitué du tétraméthoxysilane, du tétraéthoxysilane, du méthyltriéthoxysilane, du diméthyldiéthoxysilane, de l'octadécyltriéthoxysilane, du méthyltrichlorosilane, du tétra-méthylorthotitanate, du tétraéthylorthotitanate, du tétra-iso-propylorthotitanate, du tétra-n-propylorthotitanate, du tétraéthylzirconate, du tétra-iso-propylzirconate et du tétra-n-propylzirconate.

5. Système de revêtement selon la revendication 1, dans lequel, dans le composant (C), l'au moins un groupe hydrolysable est choisi dans le groupe constitué des groupes méthoxy, éthoxy, iso-propoxy, n-propoxy ou iso-butoxy et n-butoxy, et l'au moins un groupe fonctionnel réactif est choisi dans le groupe constitué des groupes époxyde, vinyle, acrylate et méthacrylate.

6. Système de revêtement selon la revendication 1, dans lequel le composant (D) comprend en outre au moins l'un d'un oxyde, d'un oxyhydrate, d'un nitrure ou d'un carbure de Si, Al, B et des métaux de transition, et dans lequel, en particulier, le composant (D) comprend au moins l'un de la silice colloïdale et du dioxyde de titane.

7. Système de revêtement selon la revendication 1, dans lequel le composant (E) comprend au moins un catalyseur acide choisi dans le groupe constitué de l'acide acétique, de l'acide citrique, de l'acide formique, de l'acide triflique, de l'acide perfluorobutyrique, de l'acide sulfurique et de l'acide chlorhydrique.

8. Système de revêtement selon la revendication 1, dans lequel le catalyseur d'imidazole du composant (F) est le 2-méthylimidazole.

9. Système de revêtement selon la revendication 1, dans lequel le composant (F) comprend en outre un initiateur de polymérisation radicalaire de groupes organiques réticulables contenant des groupes vinyles, allyles, acrylates, ou autres monomères insaturés.

10. Système de revêtement selon la revendication 1, sous la forme d'au moins un système en deux parties dans lequel certains des Composants (A) à (F) sont présents sous la forme d'un mélange comprenant une première partie du système, et d'autres parmi les Composants (A) à (F) sont présents sous la forme d'un mélange comprenant au moins une deuxième partie du système.

11. Système de revêtement selon la revendication 10, dans lequel les Composants (A) à (D) sont présents sous la forme d'un mélange comprenant la première partie du système, et les Composants (E) et (F) sont présents sous la forme d'un mélange comprenant la deuxième partie du système.

12. Système de revêtement selon la revendication 10, dans lequel les Composants (A) à (C) sont présents sous la forme d'un mélange comprenant la première partie du système, et dans lequel les Composants (D) et (E) sont présents sous la forme d'un mélange comprenant la deuxième partie du système, et dans lequel le Composant (F) est présent sous la forme d'une troisième partie du système.

13. Substrat revêtu qui inclut un substrat, et un système de revêtement selon la revendication 1 appliqué sur une surface du substrat, dans lequel, en particulier, le substrat est choisi dans le groupe constitué du verre, des substrats polymères, des textiles et des substrats métalliques, et dans lequel, en particulier, le système de revêtement est durci.

14. Procédé de préparation d'un substrat revêtu comprenant l'application d'un système de revêtement selon la revendication 1 sur une surface d'un substrat, puis le durcissement du système de revêtement dans des conditions de température ambiante,
dans lequel, en particulier, le substrat est choisi dans le groupe constitué du verre, des substrats polymères, des textiles et des substrats métalliques.
